# EUROPEAN PATENT APPLICATION

(11) **EP 1 188 477 A1**
(43) Date of publication of application: **20.03.2002**
(21) Application number: 00203174.8
(22) Date of filing: 13.09.2000
(51) Int. Cl.: B01J 20/18, C01B 3/00, F17C 11/00, C01B 13/02, C01B 39/02, B01J 29/06, B01D 53/02

(54) **Method for absorbing compounds using zeolites**

(71) Applicant: Maschmeyer, Thomas, 2625 LH Delft (NL); Jansen, Jacobus Cornelis, 2625 LL Delft (NL)
(72) Inventor: Maschmeyer, Thomas, 2625 LH Delft (NL); Jansen, Jacobus Cornelis, 2625 LL Delft (NL)
(74) Representative: Prins, Adrianus Willem

(57) **Abstract**

The present invention is directed to methods for selective and reversible absorption of compounds, particularly gases, in zeolites.

The method of the invention is based on the flexibility of the zeolite framework. It was found that the absorption selectivity of a zeolite can be controlled by deforming the zeolite, in particular the windows that provide access to the internal micropore structure. Preferably this deformation is carried out by applying an external mechanical force to the zeolite.

The method of the invention provides for an improvement with respect to selectivity, energy requirement, and/or freedom of choice in absorption processes using zeolites.

## Description

The invention is in the field of absorption processes. In particular, the invention is directed to methods for selective and reversible absorption of compounds, particularly gases, in zeolites.

Absorption processes using zeolites are well known. These processes may be employed *e.g.* for the production of oxygen from air, for gas storage, for storage of radioactive gases or liquids, *etc.*

In the present context "absorption" refers to the process of molecules being taken up in the open structure of a zeolite. It is to be understood that this is a reversible process. It is also to be understood that reversible absorption refers to absorption that may be followed by desorption, by which the molecules are desorbed, *viz*. rejected from the zeolite. Desorption can take place essentially along the same direction as the absorption has taken place, but this is in no way a requirement. Due to the porous nature of the zeolites, molecules may travel throughout the zeolite's porous inner structure. It thus becomes possible for molecules to enter (absorb) on one side of the zeolite crystal, and leave the crystal (desorb) on the other side. The fact that zeolites may comprise microporous channels that run through the crystal can thus be employed in accordance with the present invention to make membranes, as will be explained in more detail hereinafter.

Although zeolites provide for some selectivity in absorption processes because of their well defined microporous structure, there remains a need for a better control of the pore diameter, in particular for control of the windows which provide access to the internal micropore structure.

Also, the absorption selectivity of zeolites, which is based on size exclusion, is in practice strongly limited regarding freedom of choice, the pore size being mainly dictated by the zeolite type. Although the absorption selectivity may be further controlled to some extent by exchanging the zeolite with a different cation, this does not provide optimal absorption characteristics for any absorption process. This is in particular the case when the absorption selectivity is in respect to two very similarly sized molecules, such as nitrogen and oxygen, *viz*. when the demands to selectivity are very high. Thus, for a certain application in which selectivity in absorption is needed, it is not always possible to find an optimal absorbent system in the form of an (ion-exchanged) zeolite. It would be highly desirable to have an absorption method in which the pore window sizes can be controlled continuously and exactly, such that it meets the demands of the envisaged application.

Another drawback of known zeolite based absorption processes is that the subsequent desorption, which may follow the absorption, requires a considerable amount of energy.

It is an object of the present invention to provide a method which resolves at least some of the drawbacks raised above, *i.e.* a method which provides for an improvement with respect to selectivity, energy requirement, and/or freedom of choice.

The present inventors have found that the absorption selectivity of a zeolite can be controlled by deforming the zeolite, in particular the windows that provide access to the internal micropore structure. Preferably this deformation is carried out by applying an external mechanical force to the zeolite.

The method of the invention is based on the flexibility of the zeolite framework. The term "zeolite" is used in this context in the broadest sense and is intended to encompass all crystalline microporous material, including *e.g.* AlPO₄'s and modifications of zeolites, such as boron substituted or titanium based zeolites.

The deformation of the zeolite, which is used in the present invention to obtain selectivity for certain compounds, may be caused by an external mechanical force. It was found that a very small force per unit area, *e.g.* several mN/mm², typically 1-10 mN/mm², is sufficient to obtain the required deformation. The mechanical force may be exerted by any conventional means *e.g.* a clamp with an adjustable spring, or a screw system on parallel platelets. The suitable deformation pressure as well as the direction of the force applied for a given zeolite type in a given absorption process can be determined by routine experiment.

Apart from the magnitude of the exerted force, the direction of the force is also of influence on the absorption characteristics of the zeolite. Varying the direction of the applied force will lead to different absorption behaviour in case single zeolite crystals are used as absorbent. However, controlling the absorption characteristics by means of the direction of the applied force is also possible with multiple crystals, provided that these multiple crystals are oriented, at least substantially, in the same direction.

Apart from deformation resulting from mechanical force, the deformation may, at least in part, be obtained by a temperature change, a change in absorbent pressure, type of cation exchange, level of hydration, or a combination thereof. These causes of deformation may be combined with the external mechanical force in order to further fine-tune the absorption characteristics.

Zeolites in the strict meaning of the term comprise tetrahedral units, in which units either Si or Al (hereinafter also referred to as "T", which is used to indicate any framework atom, such as Si or Al) are tetrahedrally coordinated with four oxygens, such that each unit is corner connected with neighboring units forming a framework that is about 50 vol.% microporous. In case of Al, the framework is counterbalanced with a cation in the pore. The crystallinity makes structure analysis possible which provides details on atomic scale of the structure of the framework as well as the pore geometry. Of a family of *ca*. 80 zeolites the structure is well described. Next to the distribution of Si-O-Si or Si-O-Al bond angle (125° < T-O-T < 180°) and bond length (0.159 nm < T-O < 0.168 nm) per zeolite type the 1-,2- or 3-dimensionality of the pore system and the unique pore size (0.25 nm < pore diameter (dp) < 0.9 nm), and shape of the pore (from circular to ellipsoidal) is elucidated. In the collection of zeolites there is a great variation in T-O-T, related T-O, and pore geometry. As the framework/pore ratio (vol/vol) is about 1 in zeolites, all the atoms are exposed to the micropore system. Change in chemical composition on an atomic scale in the framework influences the chemical properties of the pore wall. Thus, guest/host interaction is *inter alia* determined by the hydrophobicity or hydrophilicity of the pore wall. This and other properties can be tuned with the Si/Al ratio. When the Si/Al ratio increases, the hydrophobicity, the thermal stability, the acid stability, as well as the Brønstedt acid strength increase; whereas the hydrophilicity and the ion exchange capacity decrease. Together with the choice of pore dimensions, the material can be tailored this way for a specific separation process.

Without wishing to be bound to any theory, it is believed that the flexibility of the zeolite framework, and thus the possibility of influencing the absorption characteristics by exerting a mechanical force, originates from the rotational freedom between two tetrahedral units in the framework. Thus with T atoms on a fixed position the oxygen position moves between the T positions, which results in a continuous change of bond angle and bond distance. In a cooperative way all the tetrahedral units can rotate in a zeolite structure. As the pore size and shape is determined by the oxygen positions it follows that the rotations of the tetrahedral units can influence the accessibility for guest molecules.

The zeolite can according to the present invention be applied as particulate matter, *viz*. as separate particles, *e.g.* in a packed bed. It is also possible to provide the zeolite in a membrane or any other oriented layer. Zeolite coatings in a membrane configuration are well developed. In general these membranes are prepared by performing the zeolite synthesis *in situ* on a membrane. Zeolites are synthesized typically from an aqueous solution of a silica source, an alumina source and a template molecule (an organic molecule which determines what type of zeolite is obtained). Using extremely high concentrations of nutrients, high nucleation rates can be achieved, resulting in small crystallites that start growing close together. The crystallites do not show facets because under the high supersaturation prevailing during crystal growth, roughening occurs and the crystallites have the appearance of grains. This is important for a closure of the layer, which is essential for reliable membranes. Examples of other oxides like zirconia, alumina, titania and amorphous silica layers show identical features and are confirmed to be closed layers. Secondly, by separating the synthesis mixture in a silica gel layer and, on top, a template layer in solution, the zeolite crystals can be grown in an oriented way. Orientation is important to optimize permeation of oxygen through the membrane layer and might be important for the cooperative deformation either by external mechanical force or any other parameter applied to achieve the deformation.

The use of zeolite coated membranes in accordance with the present invention has the advantage that a substantial reduction in volume and weight in the process equipment can be obtained, as well as an improvement of mass transfer, when compared to equipment that is based on packed bed columns.

As already mentioned, the microporous channels that run through the crystal of the zeolite, can be employed in a microporous membrane, *viz*. a membrane in which the pores are formed by the microporous channels of the zeolites. By exerting a pressure of the gas from which compound is to be absorbed and at the same time applying a force on the zeolite crystal in accordance with the present invention, a very efficient separation system can be obtained, which may *e.g.* be employed for the separation of oxygen from air. The desorption of the absorbed compound from the zeolite can be controlled by applying a force as well, analogously to the application of a force for controlling the absorption process.

The present invention can advantageously be applied in processes where selective absorption plays a role. According to the invention, the absorption window of the zeolite can be adjusted to fall in a range, which enables effective and selective absorption. Two types of absorption processes may be distinguished; processes in which a desired compound is absorbed; and processes in which an undesired or less desired compound is absorbed. An example of the latter type is the selective absorption of radioactive compounds from solution.

The present invention can also be used with great benefit in oxygen production processes, in particular for providing oxygen enriched gas streams, which gas streams are obtained from air. There is a continuous demand for pure oxygen or oxygen rich gas streams. In industry oxygen is employed in numerous chemical conversions. In the private sector oxygen is required for treatment of patients suffering from respiratory problems. The market for small scale units supplying oxygen is steeply increasing.

Oxygen may be obtained from air, which comprises about 20 vol.% oxygen and about 80 vol.% nitrogen.

It is known to separate oxygen from air by a number of different processes, e.g. by cryogenic separation processes. However, these processes require heavy large scale equipment. Also, these processes have a high energy consumption and require regular maintenance. More recently, air separation processes based on membrane technology have been developed, such as solid electrolyte membranes, permselective polymer membranes. Furthermore, processes employing coordination compounds are known. It is also known to use zeolites to separate oxygen from air. In these known zeolite based processes, air is enriched with oxygen by taking out nitrogen with a pressure swing method, using adsorption towers comprising packed beds of zeolite 13X, as frequently discussed in the Proceedings of the International Zeolite Conferences. Although these membrane or zeolite processes provide for some improvement with respect to equipment size and maintenance, they are still characterized by a high energy consumption, low efficiency and/or low selectivity.

By carrying out the air separation process including the step of deforming the zeolite in accordance with the invention, oxygen can be removed from the air with a very high selectivity. Furthermore, since oxygen is removed from the air (as opposed to removal of nitrogen from air, as is common in prior art processes), a high process economy is obtained, since less work is required. Therefore this process is according to the first type mentioned hereinabove, *i.e.* the type in which a desired compound is absorbed. After the absorption of oxygen, by which the zeolite is loaded with oxygen, the oxygen loaded zeolite may be discharged by the reversed process, *viz.* by deforming the zeolite again, allowing the oxygen molecules to escape from the zeolite, by which an oxygen enriched gas mixture may be obtained.

In order to absorb oxygen selectively from air, *viz*. without absorbing significant amounts of nitrogen as well, the deformation should be carried out such that the windows of at least part of the pores of said zeolite have a kinetic diameter that is between 0.346 nm and 0.364 nm. It is noted that the difference in diameter of these two molecules is only very small. Nevertheless, since the present invention allows the window size to be controlled very precisely, a good selectivity can be obtained, despite the small difference in molecule diameters.

The "kinetic diameter" of a compound as used herein, refers to the Lennard-Jones kinetic diameter (see e.g. D.W. Breck; "Zeolite Molecular Sieves", John Wiley & Sons (1974) p.636), which is generally regarded as the most appropriate measure to predict the accessibility of a zeolite for a given absorbate.

Of course the selectivity could be obtained in the release step as well, *viz*. by applying a deformation that is sufficient to desorb oxygen selectively. However, this implies that the above-mentioned advantage of process economy due to less work that is required is not fully benefited from. Furthermore, the zeolite would become filled with nitrogen. For this reason it is preferred to carry out the deformation in the absorption step such that the windows of the above mentioned diameter are obtained.

Zeolite types that are especially suitable for the absorption of oxygen from air described above, are all zeolites, including AlPO₄'s and modifications of zeolites, comprising so-called 8-ring apertures of oxygen, as denoted in the most recent Atlas on Zeolite Structures.

Another process that is illustrative for the present invention is the absorption of hydrogen. This is of particular relevance for hydrogen storage. Hydrogen storage is expected to become increasingly important for covering energy demands in the future as an alternative to fossil fuels.

Apart from the improved selectivity which is obtained in accordance with the present invention, hydrogen storage processes can benefit from another distinct advantage of the present invention, which is that the desorption of hydrogen from the zeolite can be carried out relatively easily. The desorption of hydrogen, or any other absorbed compound, can be carried out by deforming the zeolite as described hereinabove, *e.g.* by applying an external mechanical force. In this way very little work is required to release the hydrogen, which contributes to a very energy-efficient absorption/desorption process. Zeolite types that are especially suitable for the absorption of hydrogen described above, comprise so-called 8-ring apertures of oxygen, as denoted in the most recent Atlas on Zeolite Structures, and can be deformed upon mechanical pressure applied on the crystal.

Another example is the separation of CH₄ and CO₂, in particular the removal of CO₂ from methane rich streams. In this embodiment, the zeolite is treated such that it becomes selective for the absorption of CO₂ molecules, having a kinetic diameter of 0.33 nm, while excluding the methane molecules (kinetic diameter 0.38 nm). This method thus comprises an absorption step wherein the zeolite is deformed, as described hereinabove, wherein the deformation is carried out such that the windows of at least part of the pores of said zeolite have a diameter that is between 0.33 nm and 0.38 nm. This is of particular relevance in processes for producing substitute natural gas, *e.g.* Fischer-Tropsch processes.

In order to find a suitable zeolite for a given absorption process, the skilled person may start by choosing the zeolite type that has a pore opening size just excluding the smallest of all molecules of interest. In this way only a slight mechanical force is required to change the absorption selectivity of the zeolite towards the molecule having the smallest kinetic diameter.

Another feature of the present invention, is that the Brønstedt acid strength of the zeolite may be controlled by varying the force exerted on the zeolite. As mentioned above, protons may be present as a cation to counter the negative framework charge located on the AlO₄- tetrahedra in the zeolite framework, by which the zeolite becomes acidic. By varying the force exerted on the zeolite, the acid strength of the zeolite may be adjusted to meet the needs of a specific process. For example, the Brønstedt acidity may be adjusted when the zeolite is used as a catalyst, *e.g.* in hydrocarbon conversion processes, in order to optimize conversion.

The invention is furthermore directed to an apparatus comprising at least one zeolite crystal, provided with means to exert an adjustable mechanical force on said at least one zeolite crystal, and means for admitting and/or releasing gases. The means for exerting force adjustable force can be any suitable means, known to the skilled person, such as clamps or parallel plates, fitted with a screw or an adjustable spring, *etc.* These means should be constructed such that they enable adjustment of the force with respect to magnitude and/or direction, such that this force can be exerted on the zeolite crystal or zeolite crystals. The magnitude of the force is preferably such that it corresponds to a pressure of several mN/mm² (*e.g.* 1-10 mN/mm²) exerted on the crystal.

## Claims

1. Method for selective absorption of a compound in a zeolite, comprising a step wherein said zeolite is deformed by an external mechanical force, such that said zeolite selectively absorbs said compound.

2. Method according to claim 1, wherein the deformation of said zeolite is furthermore the result of a temperature change, a change in adsorbent pressure, cation exchange, level of hydration, or a combination thereof.

3. Method according to any of the previous claims, wherein said zeolite is present in a membrane.

4. Method for producing oxygen from air, which comprises an absorption step in accordance with any of the previous claims, wherein the deformation is carried out such that the windows of at least part of the pores of said zeolite have a diameter that is between 0.346 nm and 0.364 nm.

5. Method for separating CO₂ from CH₄ which comprises an absorption step in accordance with any the claims 1-3, wherein the deformation is carried out such that the windows of at least part of the pores of said zeolite have a diameter that is between 0.33 nm and 0.38 nm.

6. Method for storing hydrogen, which comprises an absorption step in accordance with any of the claims 1-3, wherein said compound is hydrogen, which is followed by a step wherein said zeolite is deformed, such that said hydrogen is released.

7. Method according to any of the previous claims, wherein said zeolite is selected from zeolites having 8-ring apertures of oxygen.

8. Method for catalytic conversion using a zeolite, comprising a step wherein said zeolite is deformed by an external mechanical force, such that the Brønstedt acidity of said zeolite changes.

9. Apparatus comprising at least one zeolite crystal, provided with means to exert an adjustable mechanical force on said at least one zeolite crystal, and means for admitting and/or releasing gases.

10. Apparatus according to claim 9, wherein said means are such, that a force resulting in a pressure of several mN/mm² is exerted on said crystal.
